Europäisches Patentamt

European Patent Office

Office européen des brevets

(11) Publication number: **0 353 166**
**A2**

(12) # EUROPEAN PATENT APPLICATION

(21) Application number: **89420260.5**

(22) Date of filing: **19.07.89**

(51) Int. Cl.⁵: **H 02 H 9/04**
**H 02 H 9/02**

(30) Priority: **25.07.88 US 223374**

(43) Date of publication of application:
**31.01.90 Bulletin 90/05**

(84) Designated Contracting States: **DE FR GB**

(71) Applicant: **JOHN FLUKE MFG. CO., INC.**
**6920 Seaway Boulevard**
**Everett Washington 98203 (US)**

(72) Inventor: **George, Richard Emerson**
**12826 4th Dr. S.E.**
**Everett Washington 98208 (US)**

**Hart, Walter Francis**
**12504 35th Avenue S.E.**
**Everett Washington 98208 (US)**

(74) Representative: **de Beaumont, Michel et al**
**1bis, rue Champollion**
**F-38000 Grenoble (FR)**

A request for correction of the claims has been filed pursuant to Rule 88 EPC. A decision on the request will be taken during the proceedings before the Examining Division (Guidelines for Examination in the EPO, A-V, 2.2).

(54) **Overvoltage protection circuit.**

(57) An overvoltage protection circuit for protecting a circuit to be protected from overvoltage comprising a metal oxide varistor connected across the circuit to be protected and a positive thermistor connected in series between the circuit to be protected and the input or supply circuit.

FIG. 3

EP 0 353 166 A2

**Description**

## OVERVOLTAGE PROTECTION CIRCUIT

Technical Field

This invention is directed to overvoltage protection circuits and more particularly to an improved overvoltage protection circuit which provides enhanced failure control.

Background Art

There are many well known arrangements for protecting electrical equipment against overvoltage or overcurrent conditions. In many instances it is necessary or desirable that the protection method also insure the personal safety of equipment users and operators. Some protective devices, such as fuses and circuit breakers, respond primarily to circuit overcurrents. Others, such as fusable resistors and positive temperature coefficient (PTC) thermistors, are designed to limit fault current flow in the presence of an overvoltage. PTC thermistors have also found wide application as surge current regulators in power supplies and appliances. A third class of limiters serves to clamp overvoltage to a safe level by forcing overload current to flow in a controlled path. Examples are Zener diodes, gas discharge devices and metal oxide varistors (MOV's). Examples of such prior overvoltage protection devices are illustrated and described in "Transient Voltage Suppression" (Manual), 5th Ed., 1986, published by the General Electric Company, U.S.A., Semiconductor Products Division and "Posistor" (Thermistor Manual), Catalog No. R14E-1, 1986, published by Murata Erie North America, Inc.

All such protective devices have energy limits. In the case of fuses, circuit breakers and fusable resistors, explosive failures may result from a combination of overvoltage and overcurrent. Similarly, voltage limiting devices may either explode or short circuit if exposed to extreme overcurrent.

Certain types of systems which normally operate at low energy levels of perhaps less than one volt-ampere may be exposed to overload conditions involving thousands of volt-amperes. One such system is an ordinary telephone line which is subjected to a lightning strike or to a power line cross. Another example is voltage measurement with a multimeter where either accidental misuse or an internal fault may trigger an explosive failure. In each of these examples worst case overload energy may be so large that conventional fusing is impractical, either from considerations of physical size, economics or both. In all instances an optimum design would be fully recoverable from routine overloads (i.e., one which may occur on a regular basis). In addition, for a worst case fault where even the protection devices fail, the failure should occur in a manner which minimizes hazards to life and property.

Disclosure of Invention

According to the invention an improved circuit or device for overvoltage protection is provided which utilizes the energy limiting characteristics inherent to a PTC thermistor in combination with the energy withstand limits of a voltage limiter such as an MOV. The PTC thermistor is connected in tandem with the voltage limiter in such fashion as to provide multiple advantages. Thus the PTC thermistor may be designed to be fully recoverable for overload conditions which would cause in line fuses or cross line voltage limiters to open or worse to fail with an accompanying explosion. According to the invention such extreme overvoltage conditions are dealt with by changing the protection focus from recoverability to non-violent sacrifice of the protective devices.

Utilizing thermistor geometry that precludes arcing across the thermistor body the failure mode of the thermistor is made more predictable than is the case for overstressed fuses or resistors. This predictable failure mode involves separation of the thermistor body material due to thermal stress. At failure the circuit current is lowered which increases the probability of safe, non-violent interruption of the overload current. Use of an MOV for energy withstand in the combination of the invention insures that it too will fully recover from moderate overvoltage conditions. The circuit of the invention permits design for extreme overvoltage conditions wherein the energy limiting provided by the thermistor precludes violent MOV package rupture. Under most conditions of moderate overload the thermistor in the new circuit maintains its surface temperature within limits that prevent either the melting or the ignition of insulating material thereby minimizing fire hazard. Under similar conditions with conventional resistor current limiting it is much more difficult to limit temperature rise to a safe non-hazardous level.

It is accordingly an object of the present invention to provide an improved overvoltage protection circuit which provides an expanded range of full recoverability from overload conditions along with non-violent sacrifice of the protective devices under most extreme overload conditions.

It is another object of the invention to provide an overvoltage protection device for protecting a circuit from overvoltage on an input or supply circuit which comprises varistor means connected across the circuit to be protected and a thermosensitive resistance having a positive resistance temperature characteristic connected in series between the circuit to be protected and the input circuit.

It is a still further object of the invention to provide an overvoltage protected circuit having metal oxide varistor means connected across the circuit and a positive thermistor connected in series between the circuit to be protected and the input circuit.

Brief Description of the Drawings

The foregoing objects and advantages of the invention will become more readily apparent upon reference to the following specification, claims and drawings wherein:

Fig. 1 is a schematic diagram of a prior art overload protection circuit;

Figs. 2A-2C are schematic diagrams of prior art telephone line protection circuits; and

Fig. 3 is a schematic diagram of an overload protection circuit constructed according to the invention.

## Best Mode for Carrying Out the Invention

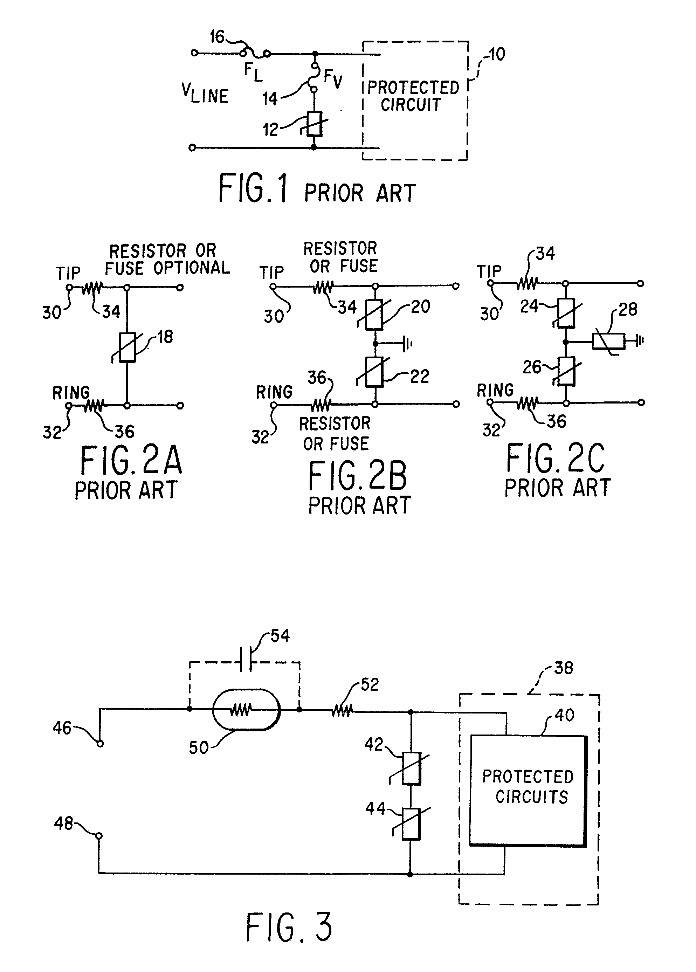

Referring to Fig. 1 there is shown a conventional fused MOV varistor overvoltage protection circuit. The protected circuit is shown at 10 shunted by an MOV varistor 12 and fuse 14. A line fuse 16 is also shown.

MOV varistors are voltage dependent non-linear devices which have an electrical behavior similar to back-to-back Zener diodes. When exposed to high voltage transients the varistor impedance changes many orders of magnitude from a near open circuit to a highly conductive level thereby clamping the transient voltage to a safe level. The potentially destructive energy of the incoming transient pulse is absorbed by the varistor and thus protects vulnerable circuit components in the protected circuit. While varistors are inherently rugged they initially fail in a short circuit mode when subjected to surges beyond their peak current/energy ratings. They also short circuit when operated at steady state voltages well beyond their voltage ratings. This latter mode of stress may result in the eventual open circuiting of the device due to melting of the lead solder joint. When the device fails in the shorted mode the current through the varistor becomes limited mainly by the source impedance. Consequently, a large amount of energy can be introduced causing mechanical rupture of the package accompanied by expulsion of package material in both solid and gaseous forms.

The circuit in Fig. 1 shows one common method of minimizing these potential varistor hazards by fusing the varistor to limit high fault currents. The location of the fuse may be in the distribution line to the circuit or it may be in series with the varistor as shown in Fig. 1. According to conventional practice fusing is coordinated with the varistor characteristics to attempt to limit current below the level where varistor package damage could occur. Such fusing is described in detail in the Transient Voltage Suppression manual referred to hereinabove. However even when the fusing accomplishes its intended purpose there is the necessity for exact replacement following each overload condition where the fuse opens to protect the varistor.

In high power industrial circuits the line currents are generally so high as to rule out the use of a line fuse 16 for varistor protection. The fuse may not clear or open under a varistor fault condition and would allow a varistor failure. In low power applications it may be feasible to use the line fuse 16 only. Use of a line fuse 16 rather than the fuse 14 does not present the problem of having the fuse arc voltage being applied across the circuit. Conversely, with fuse 14 alone, the fuse arc voltage adds to the varistor voltage, increasing the transient clamp voltage. Since some fuses can have peak arc voltages in excess of twice peak working voltage, fuse clearing can have a significant effect on protection levels. Another factor in the choice of location is the consequence of system interruption. Fuse location 16 will cause a shutdown of the circuit while location 14 will not. While the circuit can continue to operate when fuse 14 clears, protection no longer is present. For this reason it is desirable to be able to monitor the condition of the fuse 14.

Referring to Figs. 2A, 2B and 2C, there are shown typical circuits using varistors and resistors or fuses for protection of telephone system circuits. Referring to Figs. 2A-2C varistors 18-28 are shown connected between tip and ring lines 30 and 32 and ground using line resistors or fuses 34 and 36. Such circuits are also described in the aforementioned Transient Voltage Suppression manual. The comments made above in connection with Fig. 1 are also applicable to these circuits.

Referring to Fig. 3 there is shown an overvoltage protection circuit constructed in accordance with a preferred embodiment of the present invention. In that figure there is shown at 38 a device to be protected which may constitute by way of example a multimeter containing protected circuits 40. A pair of MOV varistors 42 and 44 are connected in series across the terminals or input connections to the protected circuits 40. Alternately a single MOV varistor of comparable voltage rating may be used if available. Suitable MOV's may be obtained by way of example from General Electric Company as listed in the Transient Voltage Suppression manual referred to hereinabove.

The multimeter is provided with input terminals 46 and 48 for connection to a supply circuit. The terminal 48 is connected to the MOV 44 and to one terminal or connection to the protected circuits 40. The other input terminal 46 is connected through a PTC thermistor 50 and resistor 52 to the other MOV 42 and to the other terminal or connection to the protected circuits 40. Suitable PTC thermistors may be obtained by way of example from Murata Erie as listed in the "Posistor" catalog referred to hereinabove. The stray capacitance associated with the thermistor 50 is shown in phantom circuit at 54.

As an illustrative example the voltage input at terminals 46 and 48 may be 1000 volts operating subject to 6000 volt peak transients. The MOV's 42 and 44 may be selected to provide 1800 volts limiting. The resistor 50 may be a 500 ohm one-half watt resistor which is utilized to absorb fast transients which may be coupled to the protected circuits 40 through the stray capacitance 54. The PTC thermistor 54 may be of a nominal or initial 1500 ohm value. The PTC thermistor keeps this initial resistance generally constant up to a certain temperature. Beyond that temperature the resistance value increases abruptly. This point where abrupt change occurs is called the Curie point.

The circuit of the invention takes advantage of the energy limiting characteristics inherent to a PTC thermistor when it is connected in tandem with a voltage limiter such as the MOV's 42 and 44. The concept is to coordinate the let-through energy of the thermistor with the energy withstand limits of the voltage limiter MOV's. The advantages as compared to the prior art protection circuits of Figs. 1 and 2 include the following:

1. The PTC thermistor 50 may be designed to be fully recoverable for overload conditions which would cause the fuses or resistors shown in Figs. 1 and 2 to open, or worse to fail with an accompanying fuse explosion. The new protection circuit thus provides a wider range of recoverable protection.

2. For extreme overvoltage the protection focus changes from recoverability to non-violent sacrifice of the protective devices. With thermistor geometry of a design that precludes arcing across the thermistor body the failure mode of the thermistor is more predictable than is the case for overstressed fuses or resistors. This more predictable failure mode involves separation of the thermistor body material under thermal stress. At failure the circuit current is lowered thereby increasing the probability of safe, non-violent interruption of the overload current. Thus the new circuit provides for safer and more controlled destructive failure.

3. Through choice of an MOV device of appropriate rating for energy withstand it too will fully recover from moderate overvoltage conditions. Such MOV device may comprise one or more MOV's in series as indicated by the voltage ratings of the MOV's and the voltage parameters of the circuits under consideration. The energy limiting provided by the thermistor device in this configuration will preclude violent MOV package rupture. For such an extreme condition it is acceptable for the MOV to fail but desirable that it fail by internal shorting rather than package rupture. The circuit of the invention provides such protection.

4. Under some conditions of moderate overload, the thermistor 50 will maintain its surface temperature within limits that will prevent either the melting or the ignition of insulating material, thereby minimizing fire hazard. Under similar conditions, with conventional resistor current limiting, it is much more difficult to limit temperature rise to a safe non-hazardous level.

5. The replacement of fuses or of fusable resistors following an overload condition has always required that exact replacements be used. Incorrect replacements, always a possibility to be anticipated, may result in a hazardous failure during a subsequent overload. The recoverable nature of the thermistor MOV combination eliminates the need for component replacement following routine overloads.

Although the present invention has been described and illustrated in detail, it is to be understood that the same is by way of illustration and example only and is not to be taken by way of limitation, the spirit and scope of the present invention being limited only by the terms of the appended claims.

**Claims**

1. An overvoltage protected circuit having power input terminals adapted to be connected to power supply terminals comprising in combination; a circuit to be protected connected to said power input terminals, varistor means connected across said power input terminals, and a thermosensitive resistance means having a positive resistance temperature characteristic connected between one of said input terminals and one of said power supply terminals.

2. A device according to Claim 1 wherein said varistor means comprises a metal oxide varistor.

3. A device according to Claim 2 wherein said thermosensitive resistance means comprises a positive thermistor.

4. A device according to Claim 3 including resistance means connected between said thermistor and said input terminal.

5. An overvoltage protected circuit adapted to be connected to a supply circuit comprising in combination; a circuit to be protected, varistor means connected across said circuit to be protected, and a thermosensitive resistance means having a positive resistance temperature characteristic connected in series between said circuit to be protected and said supply circuit.

6. A device according to Claim 5 wherein said varistor means comprises a metal oxide varistor.

7. A device according to Claim 6 wherein said thermosensitive resistance means comprises a positive thermistor.

8. A device according to Claim 7 including resistance means connected between said thermistor and said circuit to be protected.

9. An overvoltage protection device for protecting a circuit to be protected from overvoltage on an input circuit for said protected circuit comprising in combination; varistor means connected across said circuit to be protected and a thermosensitive resistance means having a positive resistance temperature characteristic connected in series between said circuit to be protected and said input circuit.

10. A device according to Claim 9 wherein said varistor means comprises a metal oxide varistor.

11. A device according to Claim 10 wherein said thermosensitive resistance means comprises a positive thermistor.

12. A device according to Claim 11 including resistance means connected between said thermistor and said circuit to be protected.

FIG.1 PRIOR ART

FIG.2A
PRIOR ART

FIG.2B
PRIOR ART

FIG.2C
PRIOR ART

FIG. 3